# EUROPÄISCHE PATENTSCHRIFT

(11) **EP 0 745 037 B1**
(45) Veröffentlichungstag und Bekanntmachung des Hinweises auf die Patenterteilung: **02.06.1999**
(21) Anmeldenummer: 95908227.2
(22) Anmeldetag: 31.01.1995
(51) Int. Cl.: B60N 3/10

(54) **HALTEVORRICHTUNG FÜR FLÜSSIGKEITSBEHÄLTER, INSBESONDERE ZUM EINBAU IN KRAFTFAHRZEUGE**
HOLDING DEVICE FOR LIQUID CONTAINER, IN PARTICULAR TO BE MOUNTED IN MOTOR VEHICLES
DISPOSITIF DE MAINTIEN DE RECIPIENT A LIQUIDE, NOTAMMENT A MONTER DANS DES VEHICULES A MOTEUR

(30) Priorität: 15.02.1994 CH 457/94
(43) Veröffentlichungstag der Anmeldung: 04.12.1996
(73) Patentinhaber: fischerwerke Artur Fischer GmbH & Co. KG, D-72178 Waldachtal (DE)
(72) Erfinder: ACKERET, Peter, CH-8700 Küsnacht (CH)
(86) Internationale Anmeldenummer: EP9500329
(87) Internationale Veröffentlichungsnummer: WO9521750

(56) Entgegenhaltungen:
- DE-U- 9 308 232
- US-A- 2 510 545
- US-A- 5 072 909
- US-A- 5 280 870
- PATENT ABSTRACTS OF JAPAN vol. 17, no. 77 (M-1367) 16. Februar 1993 & JP,A,04 278 846 (TOYOTA MOTOR CORP) 5. Oktober 1992
- PATENT ABSTRACTS OF JAPAN vol. 16, no. 87 (M-1217) 3. März 1992 & JP,A,03 271 033 (TOYOTA) 3. Dezember 1991

## Beschreibung

Die Erfindung betrifft eine Haltevorrichtung für Flüssigkeitsbehälter, insbesondere zum Einbau in Kraftfahrzeugen (Kfzg.), mit den Merkmalen des Oberbegriffs des Anspruchs 1.

Aus der US-A-5 280 870 ist eine derartige Haltevorrichtung für Flüssigkeitsbehälter bekannt, die eine Klammer zum Einhängen in einen Fensterschlitz einer Fahrzeugtür aufweist. An der Klammer ist eine Platte angebracht, die innen an der Fahrzeugtür herabhängt. An der Platte ist eine Auffangschale angebracht, die in eine horizontale Position herabschwenkbar ist. Von der Auffangschale ist eine Stütze vertikal nach oben schwenkbar, deren Abstand von der Platte mittels einer Verzahnung in der Auffangschale verstellbar ist. Die bekannte Haltevorrichtung hat zunächst den Nachteil, daß zu ihrem Gebrauch die Auffangschale heruntergeklappt, anschließend die Stütze hochgeklappt und dann der Abstand zwischen der Stütze und der Platte der Haltevorrichtung eingestellt werden muß. Nach Gebrauch muß die Stütze von der Platte weg verschoben, dann in die Auffangschale hineingeklappt und die Auffangschale zum Schließen nach oben an die Platte der Haltevorrichtung verschwenkt werden. Die Handhabung ist somit aufwendig. Weiterer Nachteil ist, daß die bekannte Haltevorrichtung nicht zum Einbau in ein Kraftfahrzeug geeignet ist. Das Einhängen im Fensterschlitz der Fahrzeugtür kann ein Öffnen des Fensters durch Versenken in die Tür und ein Schließen des Fensters durch Heben aus der Tür beeinträchtigen. Desweiteren kann beim Heben des Fensters die Klammer der Haltevorrichtung aus dem Fensterschlitz gehoben werden, so daß die Haltevorrichtung herabfällt.

In der US-A-5 072 909 ist eine Haltevorrichtung für Flüssigkeitsbehälter offenbart, die ebenfalls eine Klammer zum Einhängen in den Fensterschlitz einer Fahrzeugtür aufweist. Auch diese Haltevorrichtung weist eine an der Innenseite der Tür herabhängende Platte auf, von der eine Auffangschale in eine horizontale Position nach unten schwenkbar angebracht ist. Eine zweiarmige Halteklammer, die einen eingestellten Flüssigkeitsbehälter am Umfang umgreift, ist nach oben schwenkbar an der Platte angebracht. Der Abstand der beiden Arme der Klammer ist verstellbar, um die Klammer an Flüssigkeitsbehälter unterschiedlichen Durchmessers anpassen zu können. Auch diese Haltevorrichtung hat den Nachteil, daß das Auf- und Zuklappen jeweils mehrere Handgriffe erfordert, und daß die Haltevorrichtung sich nicht zum Einbau in ein Kraftfahrzeug eignet, sondern in dessen Fensterschlitz eingehängt werden muß.

Aufgabe der vorliegenden Erfindung ist die Schaffung einer Haltevorrichtung für Flüssigkeitsbehälter, insbesondere zum Einbau in Kfzg., welche in der Aufbewahrungsposition platzsparend in einem Schutzgehäuse untergebracht und so ausgebildet ist, dass Flüssigkeiten, welche aus einem eingesetzten Flüssigkeitsbehälter überschwappen, in der Haltevorrichtung aufgefangen werden und sich nicht über die Innenausstattung des Kfzg. ergiessen können.

Die gemäss der Erfindung zur Lösung dieser Aufgabe vorgesehenen Merkmale sind im Patentanspruch 1 genannt.

Durch die unterhalb des Halters angeordnete Auffangschale wird sichergestellt, dass Flüssigkeiten, welche aus den in den Halter eingesetzten Dosen oder Bechern infolge von Vibrationen, Beschleunigungen oder Handhabungen überschwappen, in der Haltevorrichtung aufgefangen werden und sich nicht über die Innenausstattung des Kfzg. ergiessen können.

Zur platzsparenden Unterbringung bei Nichtgebrauch lassen sich der Halter und die Auffangschale ineinanderklappen, wodurch das Volumen ca. halbiert werden kann.

Durch das Auseinanderbewegen von Halter und Auffangschale beim Ausfahren aus dem Schutzgehäuse wird der Halter freigegeben, so dass ein Flüssigkeitbehälter von oben eingesetzt werden kann, welcher an seiner Mantelfläche vom Halter und an seiner Bodenfläche von der Auffangschale abgestützt wird.

Die Auffangschale kann direkt oder über einen Träger mit dem Halter beweglich verbunden sein. Letzteres bietet den Vorteil, dass die Auffangschale für Reinigungszwecke aus der Haltevorrichtung entnommen werden kann. Dies könnte beispielsweise durch Aufklappen des Halters nach oben oder durch Herausziehen der Auffangschale nach vorne erfolgen.

In einer bevorzugten Ausführungsform fährt der Halter aus dem Schutzgehäuse aus, während sich die Auffangschale unter den Halter absenkt. Im Sinne einer kinematischen Umkehr wäre es natürlich auch möglich, dass die Auffangschale aus dem Gehäuse ausfährt und der Halter sich aus dieser heraus nach oben bewegt.

Die Auseinanderbewegung von Halter und Auffangschale könnte durch Federkraft, das Ineinanderklappen beim Einschub in das Schutzgehäuse über eine Steuerkurve, beispielsweise am Gehäuse, erfolgen.

Der Ausschub von Halter und Auffangschale aus dem Schulzgehäuse könnte ebenfalls durch Federkraft erfolgen, wobei dann eine manuell lösbare Verriegelung vorzusehen wäre, die den Halter bzw. die Auffangschale im Schutzgehäuse verriegeln würde.

Die am Halter angeordneten Abstützungen für die Flüssigkeitsbehälter sind vorzugsweise als ringförmige Ausnehmungen ausgebildet, in denen der Flüssigkeitsbehälter von oben eingesetzt werden kann. Die Oberfläche des Halters ist vorzugsweise so geneigt, dass übergeschwappte Flüssigkeiten durch diesen Ring oder sonstige Durchbrüche im Halter in die Auffangschale geleitet werden.

Die Haltevorrichtung kann für die Aufnahme von einem oder mehreren hinter- und/oder nebeneinander stehenden Flüssigkeitsbehältern ausgebildet sein.

Weitere Merkmale und Vorteile der Erfindung werden nachstehend unter Bezugnahme auf die beigefügten Zeichnungen näher erläutert.
- Figur 1: zeigt einen Längsschnitt durch eine erste Ausführungsform der Haltevorrichtung mit einem eingesetzten Flüssigkeitsbehälter, in der äusseren Raststellung.
- Figur 2: zeigt einen Querschnitt durch die Haltevorrichtung gemäß Ausführungsform von Fig. 1, in der äusseren Raststellung.
- Figur 3: zeigt einen Längsschnitt durch die Haltevorrichtung gemäss Ausführungsform von Fig. 1 und Fig. 2, in der inneren Raststellung.
- Figur 4: zeigt einen Querschnitt durch die Haltevorrichtung gemäss Ausführungsform von Fig. 1 bis Fig. 3, in der inneren Raststellung.
- Figur 5: zeigt einen Längsschnitt durch eine zweite Ausführungsform der Haltevorrichtung, in der äusseren Raststellung.
- Figur 6: zeigt einen Längsschnitt durch eine dritte Ausführungsform der Haltevorrichtung in der äusseren Raststellung.

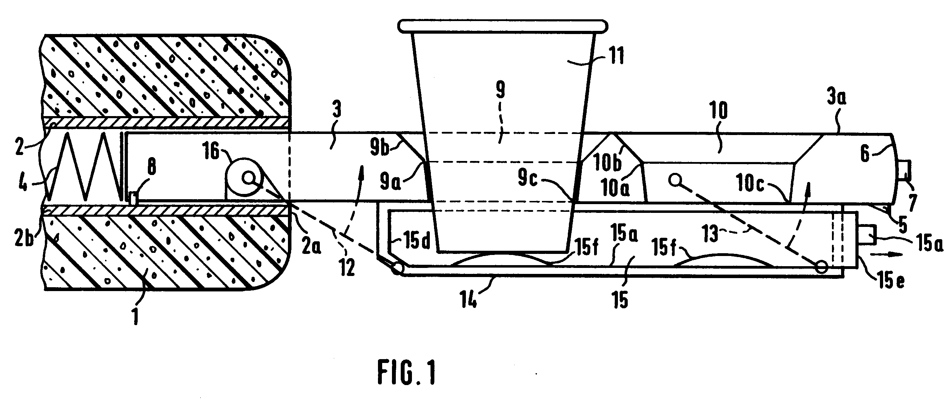

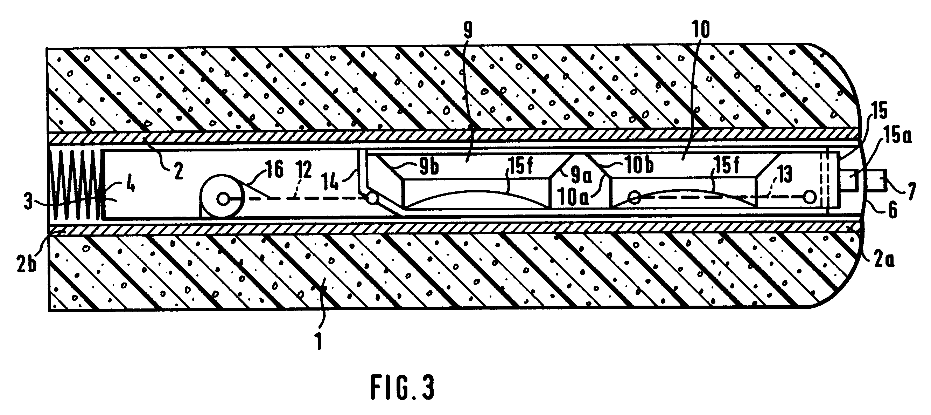

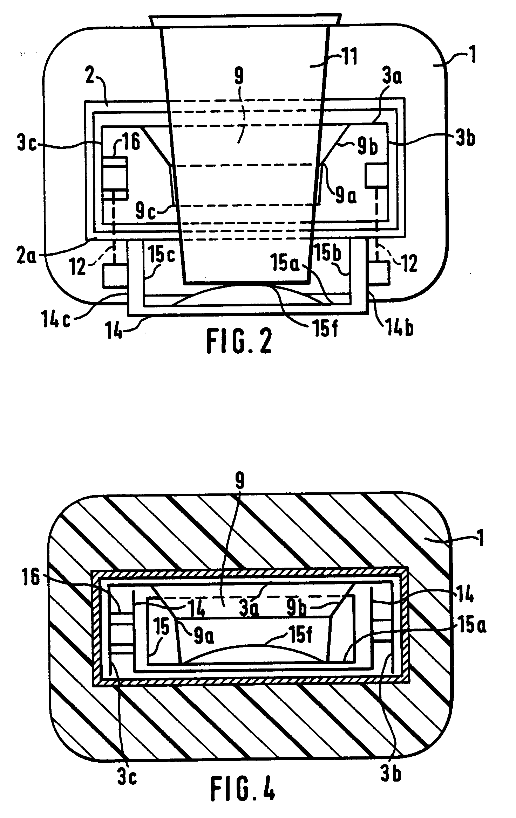

Fig. 1 bis 4 zeigen eine erste Ausführungsform der Haltevorrichtung. In der Armlehne 1 ist das Schutzgehäuse 2 angeordnet, in welchem der Halter 3 längsverschieblich geführt ist.

Zwischen dem Schutzgehäuse 2 und dem Halter 3 ist eine Feder 4 angeordnet, welche beim Lösen der Verriegelung 5 mittels der an der Frontwand 6 angeordneten Taste 7, den Halter 3 von der inneren Raststellung in die äussere Raststellung bewegt, wobei der Ausfahrweg durch den am Schutzgehäuse 2 angeordneten Anschlag 8 begrenzt wird.

Der Halter 3 hat einen U-förmigen Querschnitt, welcher durch die Deckwand 3a und die beiden Seitenwände 3b, 3c gebildet wird. An der vorderen Stirnseite wird der Halter 3 durch die Frontwand 6 abgedeckt, welche in der inneren Raststellung des Halters 3 die Öffnung im Schutzgehäuse 2 verschliesst.

In der Deckwand 3a des Halters 3 sind die beiden ringförmig ausgebildeten Ausnehmungen 9, 10 zur Aufnahme der Flüssigkeitsbehälter 11 angeordnet. Die Höhe der Abstützflächen 9a, 10a der Ausnehmungen 9, 10 entsprechen im wesentlichen der Höhe der Seitenwände 3b 3c des Halters 3 und sind an ihren oberen Enden mit Einlaufschrägen 9b, 10b versehen, während sie an ihren unteren Enden 9c, 10c offen sind.

Am Halter 3 ist über die Schwenkarme 12, 13 der Träger 14 angelenkt, in welchem die Auffangschale 15 längsverschieblich gelagert ist.

Die Schwenkarme 12, 13 sind auf den Innenseiten der Seitenwände 3b, 3c des Halters 3 bzw. auf der Aussenseite der Seitenwände 14b, 14c des Trägers 14 drehbar gelagert.

Die Auffangschale 15 hat eine Bodenwand 15a, Seitenwände 15b, 15c sowie eine Rückwand 15d und eine Stirnwand 15e, deren Höhen im wesentlichen den Höhen der Seitenwände 3b, 3c bzw. der Frontwand 6 des Halters 3 entsprechen.

In der äusseren Raststellung wird der Träger 14 zusammen mit der Auffangschale 15 unter Einwirkung der Kraft der Schenkelfeder 16 soweit unter den Halter 3 abgesenkt, dass die Auffangschale 15 zu Reinigungszwecken am Griff 15a unter der Frontwand 6 hindurch aus dem Träger 14 herausgezogen bzw. in diesen eingeschoben werden kann.

Auf der Bodenwand 15a der Auffangschale 15 sind Abstützungen 15f angeordnet, welche die in den Halter 3 eingesetzten Flüssigkeitsbehälter 11 von der Bodenwand 15a distanziert, abstützen. Dadurch wird vermieden, dass die Flüssigkeitsbehälter 11 durch die in der Auffangschale 15 gesammelte Flüssigkeit verschmutzt werden.

Beim Einschieben des Halters 3 von der äusseren Raststellung in die innere Raststellung fahren die beiden Schwenkarme 12 auf die Frontkante 2a der Bodenwand 2b des Schutzgehäuses 2 auf und werden gegen die Kraft der Schenkelfeder 16 nach oben gedrückt. Dadurch wird der Träger 14 zusammen mit der Auffangschale 15 von unten in den Halter 3 eingeklappt und die Seitenwände 14b, 14c des Trägers 14, sowie die Seitenwände 15b, 15c und die Rückwand 15d sowie die Stirnwand 15e der Auffangschale 15 werden in die von den Seitenwänden 3b, 3c und der Frontwand 6, sowie den Abstützflächen 9a, 10a begrenzten Hohlräume des Halters 3 eingefahren.

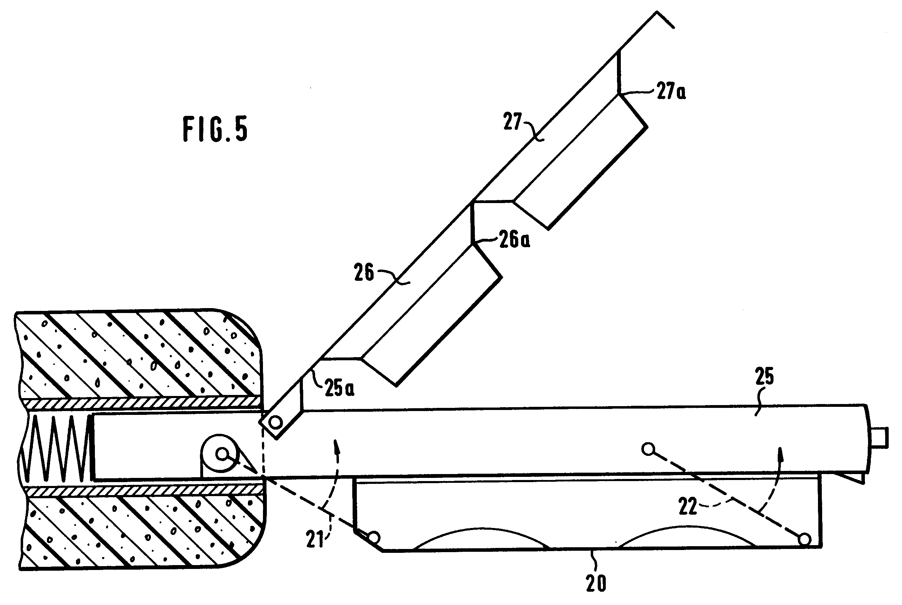

Fig. 5 zeigt eine alternative Ausführungsform, bei welcher die Auffangschale 20 direkt über die Schwenkarme 21, 22 am Halter 25 angelenkt ist. Zum Reinigen der Auffangschale 20 kann der am Halter 25 drehbar angelenkte Deckel 25a, an dem auch die Abstützflächen 26a, 27a der ringförmigen Ausnehmungen 26, 27 angeordnet sind, nach oben aufgeklappt werden.

Alternativ bestünde natürlich auch bei dieser Ausführungsform die Möglichkeit, dass die Auffangschale 20 über einen Träger mit dem Halter 25 verbunden wäre und so zum Reinigen aus der Haltevorrichtung nach oben entnommen werden könnte.

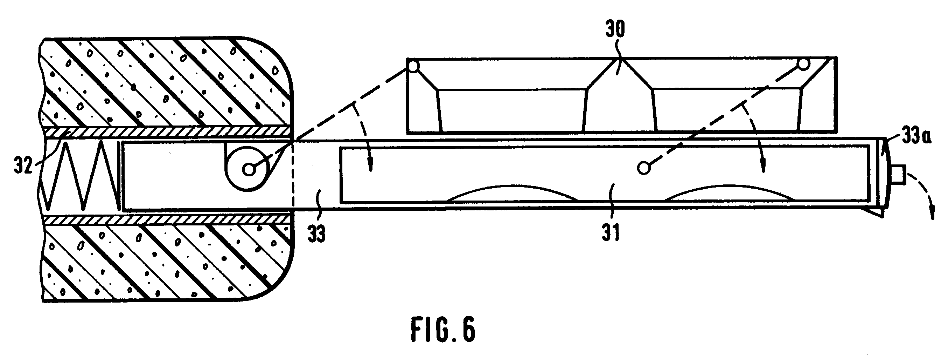

Fig. 6 zeigt eine weitere Ausführungsform, bei welcher in der äusseren Raststellung der Halter 30 aus der Auffangschale 31, welche in den im Schutzgehäuse 32 gelagerten Träger 33 eingesetzt ist, nach oben ausfährt.

Durch Abklappen der Frontwand 33a kann die Auffangschale 31 nach vorne aus dem Träger 33 herausgezogen werden.

Auch bei dieser Ausführungsform wäre es natürlich möglich, den Träger 33 wegzulassen und die Auffangschale 31 direkt im Schutzgehäuse 32 längsbeweglich zu führen. Zum Reinigen der Auffangschale müsste dann beispielsweise der Halter 30 nach oben aufgeklappt werden können, wie bereits in der Ausführungsform gemäss Figur 5 gezeigt.

## Patentansprüche

1. Haltevorrichtung für Flüssigkeitsbehälter, insbesondere zum Einbau in Kfzg., mit einem Halter (3, 25, 30), welcher den Flüssigkeitsbehälter (11) an seiner Mantelfläche abstützt und einer, unterhalb des Flüssigkeitsbehälters (11) angeordneten, mit dem Halter (3, 25, 30) beweglich verbundenen Auffangschale (15, 20, 31) zum Sammeln von übergeschwappter Flüssigkeit, **dadurch gekennzeichnet**, daß die Haltevorrichtung ein Schutzgehäuse (2, 32) aufweist, und daß der Halter (3, 25, 30) und die Auffangschale (15, 20, 31) zwischen einer inneren Raststellung, in der sie ineinandergeklappt im Schutzgehäuse 2, 32) eingeschlossen sind, und einer äusseren Raststellung beweglich sind, in welcher sich der Halter (3, 25, 30) und die Auffangschale (15, 20, 31) soweit auseinanderbewegen, dass der Flüssigkeitsbehälter (11) in den Halter (3, 25, 30) eingesetzt werden kann.

2. Haltevorrichtung nach Anspruch 1, dadurch gekennzeichnet, dass der Halter (3, 25, 30) längsverschieblich im Schutzgehäuse (2, 32) eingeführt ist.

3. Haltevorrichtung nach Anspruch 1 oder 2, dadurch gekennzeichnet, dass an der vorderen Stirnseite des Halters (3, 25, 30) eine Frontwand (6) angeordnet ist, welche bei eingeschobenem Halter die Oeffnung am Schutzgehäuse (2, 32) verschliesst.

4. Haltevorrichtung nach einem oder mehreren der Ansprüche 1 bis 3, dadurch gekennzeichnet, dass der Halter (3, 25, 30) eine Deckwand (3a) und von dieser abwärts gerichtete Seitenwände (3b, 3c) aufweist.

5. Haltevorrichtung nach einem oder mehreren der Ansprüche 1 bis 4, dadurch gekennzeichnet, dass in der Deckwand (3a) ringförmige Ausnehmungen (9, 10, 26, 27) für die Aufnahme der Flüssigkeitsbehälter (11) angeordnet sind.

6. Haltevorrichtung nach Anspruch 5, dadurch gekennzeichnet, dass an den Ausnehmungen (9, 10, 26, 27) abwärts gerichtete Abstützflächen (9a, 10a, 26a, 27a) zum Abstützen der Flüssigkeitsbehälter (11) angeordnet sind.

7. Haltevorrichtung nach einem der Ansprüche 4 bis 6, **dadurch gekennzeichnet**, dass die Deckwand (3a) Schrägflächen (9b, 10b) aufweist, welche Flüssigkeiten in die Ausnehmungen (9, 10, 26, 27) leiten.

8. Haltevorrichtung nach einem oder mehreren der vorangehenden Ansprüche, dadurch gekennzeichnet, dass die Auffangschale (15, 20, 31) über einen Träger (14, 33) mit dem Halter (3, 25, 30) verbunden ist.

9. Haltevorrichtung nach Anspruch 8, **dadurch gekennzeichnet**, dass der Träger (14, 33) und der Halter (3, 25, 30) über Schwenkarme (12, 13, 21, 22) parallelverschieblich miteinander verbunden sind.

10. Haltevorrichtung nach Anspruch 8 oder 9, dadurch gekennzeichnet, dass die Auffangschale (15, 20, 31) lösbar mit dem Träger (14, 33) verbunden ist.

11. Haltevorrichtung nach Anspruch 10, dadurch gekennzeichnet, dass die Auffangschale (15, 20, 31) parallel zur Deckwand (3a) nach vorne aus dem Träger (14, 33) entnommen bzw. in diesen eingeschoben werden kann.

12. Haltevorrichtung nach einem oder mehreren der vorangehenden Ansprüche, dadurch gekennzeichnet, dass die Auffangschale (15, 20, 31) eine Bodenwand (15a), Seitenwände (15b, 15c) sowie eine Rückwand (15d) und eine Stirnwand (15e) aufweist.

13. Haltevorrichtung nach einem oder mehreren der vorangehenden Ansprüche, dadurch gekennzeichnet, dass die Bodenwand (15a) Abstützungen (15f) aufweist, auf denen sich die Bodenflächen der Flüssigkeitsbehälter (11) abstützen.

14. Haltevorrichtung nach einem oder mehreren der vorangehenden Ansprüche, dadurch gekennzeichnet, dass die Seitenwände (14b, 14c) des Trägers (14) sowie die Seitenwände (15b, 15c) und die Rückwand (15d) sowie die Stirnwand (15e) der Auffangschale (15) in die, von den Seitenwänden (3b, 3c) und der Frontwand (6), sowie den Abstützflächen (9a, 10a) begrenzten Hohlräume des Halters (3) eingeklappt werden können.

15. Haltevorrichtung nach einem oder mehreren der vorangehenden Ansprüche, dadurch gekennzeichnet, dass am Halter (3, 25, 30) ein aufklappbarer Deckel (25a) angeordnet ist, welcher die Ausnehmungen (9, 10, 26, 27) enthält.

16. Haltevorrichtung nach Anspruch 15, dadurch gekennzeichnet, dass die Abstützflächen (9a, 10a, 26a, 27a) am Deckel (25a) angeordnet sind.

17. Haltevorrichtung nach Anspruch 16, dadurch gekennzeichnet, dass die Auffangschale (15, 20, 31) nach oben aus dem Halter (3, 25, 30) entnommen werden kann.

18. Haltevorrichtung nach einem oder mehreren der vorangehenden Ansprüche, dadurch gekennzeichnet, dass die Auffangschale (15, 20, 31) bzw. der Träger (14, 33) längsverschieblich im Schutzgehäuse (2, 32) geführt sind.

19. Haltevorrichtung nach Anspruch 18, **dadurch gekennzeichnet**, dass der Hafer (30) in der äusseren Raststellung aus der Auffangschale (31) bzw. dem Träger (33) nach oben ausklappt.

20. Haltevorrichtung nach einem der Ansprüche 18 oder 19, dadurch gekennzeichnet, dass der Träger (14, 33) eine aufklappbare Frontwand (33a) enthält und die Auffangschale (15, 20, 31) nach vorne aus dem Träger entnommen werden kann.

21. Haltevorrichtung nach einem oder mehreren der vorangehenden Ansprüche, dadurch gekennzeichnet, dass die Bewegung des Halters (3, 25, 30) und des Trägers (14, 33) mit der Auffangschale (15, 20, 31) aus dem Schutzgehäuse (2, 32) von der inneren in die äussere Raststellung unter Krafteinwirkung einer Feder (4) erfolgt.

22. Haltevorrichtung nach Anspruch 21, dadurch gekennzeichnet, dass der Halter (3, 25, 30) bzw. der Träger (14, 33) oder die Auffangschale (15, 20, 31) über eine lösbare Verriegelung (5) im Schutzgehäuse (2, 32) festgehalten werden.

23. Haltevorrichtung nach Anspruch 22, dadurch gekennzeichnet, dass die Verriegelung (5) über eine an der Frontwand (6, 33a) angeordnete Taste (7) entriegelt werden kann.

24. Haltevorrichtung nach einem oder mehreren der vorangehenden Ansprüche, dadurch gekennzeichnet, dass die Auseinanderbewegung vom Halter (3, 25, 30) und der Auffangschale (15, 20, 31) bzw. dem Träger (14, 33) beim Ausschub von der inneren in die äussere Raststellung durch die Kraft einer Feder (16) erfolgt.

25. Haltevorrichtung nach Anspruch 24, dadurch gekennzeichnet, dass das Ineinanderklappen des Halters (3, 25, 30) und der Auffangschale (15, 20, 31) bzw. des Trägers (14, 33) beim Einschub ins Schutzgehäuse (2, 32) durch Auflaufen auf die Frontkanten (2a) am Schutzgehäuse (2, 32) aktiviert wird.

## Claims

1. Holding device for containers for liquid, especially for installation in motor vehicles, having a holder (3, 25, 30), which supports the container for liquid (11) at its circumferential surface, and arranged beneath the container for liquid (11) and movably joined to the holder (3, 25, 30) a drip tray (15, 20, 31) for collecting spilled liquid, **characterised in that**, the holder (3, 25, 30) has a protective housing (2, 32), and in that the holder (3, 25, 30) and the drip tray (15, 20, 31) are movable between an inner locked position, in which they are enclosed, nested into one another, in the protective housing (2, 32), and an outer locked position in which the holder (3, 25, 30) and the drip tray (15, 20, 31) move sufficiently far apart to enable the container for liquid (11) to be placed in the holder (3, 25, 30).

2. A holding device according to claim 1, **characterised in that** the holder (3, 25, 30) is installed so that it is longitudinally displaceable in the protective housing (2, 32).

3. A holding device according to claim 1 or 2, **characterised in that** a front wall (6) which closes the opening of the protective housing (2, 32) when the holder has been inserted is arranged at the front side of the holder (3, 25, 30).

4. A holding device according to one or more of claims 1 to 3, **characterised in that** the holder (3, 25, 30) has a top wall (3a) and side walls (3b, 3c) directed downwardly therefrom.

5. A holding device according to one or more of claims 1 to 4, **characterised in that** ring-shaped openings (9, 10, 26, 27) for receiving the containers for liquid (11) are arranged in the top wall (3a).

6. A holding device according to claim 5, **characterised in that** downwardly-directed supporting surfaces (9a, 10a, 26a, 27a) for supporting the containers for liquid (11) are arranged at the openings (9, 10, 26, 27).

7. A holding device according to one or more of claims 4 to 6, **characterised in that** the top wall (3a) has sloping surfaces (9b, 10b) which guide fluid into the openings (9, 10, 26, 27).

8. A holding device according to one or more of the preceding claims, **characterised in that** the drip tray (15, 20, 31) is joined to the holder (3, 25, 30) by way of a carrier (14, 33).

9. A holding device according to claim 8, **characterised in that** the carrier (14, 33) and the holder (3, 25, 30) are joined to each other by way of swivel arms (12, 13, 21, 22) so that they are displaceable while remaining parallel.

10. A holding device according to claim 8 or 9, **characterised in that** the drip tray (15, 20, 31) is releasably joined to the carrier (14, 33).

11. A holding device according to claim 10, **characterised in that** the drip tray (15, 20, 31) is arranged to be removed parallel to the top wall (3a) in a forward direction from the carrier (14, 33) and to be inserted into the same.

12. A holding device according to one or more of the preceding claims, **characterised in that** the drip tray (15, 20, 31) has a bottom wall (15a), side walls (15b, 15c) and a rear wall (15d) and a front wall (15e).

13. A holding device according to one or more of the preceding claims, **characterised in that** the bottom wall (15a) has supports (15f) on which the bottom surfaces of the containers for liquid (11) are supported.

14. A holding device according to one or more of the preceding claims, **characterised in that** the side walls (14b, 14c) of the carrier (14), and the side walls (15b, 15c) and the rear wall (15d) and front wall (15e) of the drip tray (15) can be folded into the cavities of the holder (3) bounded by the side walls (3b, 3c) and the front wall (6) and bounded also by the supporting surfaces (9a, 10a).

15. A holding device according to one or more of the preceding claims, **characterised in that** a fold-up cover (25a) which contains the openings (9, 10, 26, 27) is arranged on the holder (3, 25, 30).

16. A holding device according to claim 15, **characterised in that** the supporting surfaces (9a, 10a, 26a, 27a) are arranged on the cover (25a).

17. A holding device according to claim 16, **characterised in that** the drip tray (15, 20, 31) can be taken upwardly out of the holder (3, 25, 30)

18. A holding device according to one or more of the preceding claims, **characterised in that** the drip tray (15, 20, 31) and the carrier (14, 33) are guided in the protective housing (2, 32) so as to be longitudinally displaceable.

19. A holding device according to claim 18, **characterised in that** in the outer locked position the holder (30) swings upwardly out of the drip tray (31) or the carrier (33).

20. A holding device according to one of claims 18 or 19, **characterised in that** the carrier (14, 33) contains a fold-down front wall (33a) and the drip tray (15, 20, 31) can be taken forwards out of the carrier.

21. A holding device according to one or more of the preceding claims, **characterised in that** the movement of the holder (3, 25, 30) and the carrier (14, 33) with the drip tray (15, 20, 31) out of the protective housing (2, 32) from the inner locked position into the outer locked position is effected by the action of a spring (4).

22. A holding device according to claim 21, **characterised in that** the holder (3, 25, 30) and the carrier (14, 33) or the drip tray (15, 20, 31) are fixedly held in the protective housing (2, 32) by way of a releasable locking mechanism (5).

23. A holding device according to claim 22, **characterised in that** the locking mechanism (5) can be unlocked by means of a button (7) arranged on the front wall (6, 33a).

24. A holding device according to one or more of the preceding claims, **characterised in that** the movement away from each other of the holder (3, 25, 30) and the drip tray (15, 20, 31) or the carrier (14, 33) is effected by the force of a spring (16) during ejection from the inner into the outer locked position.

25. A holding device according to claim 24, **characterised in that** nesting of the holder (3, 25, 30) and the drip tray (15, 20, 31) or carrier (14, 33) into one another during insertion into the protective housing (2, 32) is initiated by running onto the front edges (2a) on the protective housing (2, 32).

## Revendications

1. Dispositif de maintien pour récipients à liquide, en particulier pour montage dans des véhicules automobiles, comportant une console (3, 25, 30) qui appuie le récipient à liquide (11) par sa surface latérale et une cuvette de collecte (15, 20, 31) qui est disposée en dessous du récipient à liquide (11), qui est relié, avec liberté de déplacement, à la console (3, 25, 30) qui est prévue pour collecter le liquide ayant débordé, caractérisé par le fait que le dispositif de maintien présente un boîtier de protection (2, 32) et que la console (3, 25, 30) et la cuvette de collecte (15, 20, 31) peuvent passer entre une position de crantage intérieure, dans laquelle elles sont enfermées dans le boîtier de protection (2, 32) par rabattement l'une dans l'autre, et une position de crantage extérieure dans laquelle la console (3, 25, 30) et la cuvette de collecte (15, 20, 31) se séparent suffisamment l'une de l'autre pour qu'il soit possible de poser le récipient à liquide (11) sur la console (3, 25, 30).

2. Dispositif de maintien selon la revendication 1, caractérisé par le fait que la console (3, 25, 30) est introduite dans le boîtier de protection (2, 32) avec liberté de coulissement longitudinal.

3. Dispositif de maintien selon la revendication 1 ou 2, caractérisé par le fait que sur la face frontale avant de la console (3, 25, 30) est disposée un paroi avant (6) qui, lorsque la console est rentrée, obture l'ouverture existant sur le boîtier de protection (2, 32).

4. Dispositif de maintien selon une ou plusieurs des revendications 1 à 3, caractérisé par le fait que la console (3, 25, 30) présente une paroi de couvercle (3a) et des parois latérales (3b, 3e) qui, depuis celle-ci, sont orientées vers le bas.

5. Dispositif de maintien selon une ou plusieurs des revendications 1 à 4, caractérisé par le fait que dans la paroi de couverture (3a) sont disposés des évidements annulaires (9, 10, 26, 27) pour recevoir les récipients à liquide (11).

6. Dispositif de maintien selon la revendication 5, caractérisé par le fait que sur les évidements annulaires (9, 10, 26, 27), des surfaces d'appui (9a, 10a, 26a, 27a), orientées vers le bas, sont disposées pour appuyer les récipients à liquide (11).

7. Dispositif de maintien selon l'une des revendications 4 à 6, caractérisé par le fait que la paroi de couverture (3a) présente des surfaces obliques (9b, 10b) qui guident les liquides dans les évidements annulaires (9, 10, 26, 27).

8. Dispositif de maintien selon une ou plusieurs des revendications précédentes, caractérisé par le fait que la cuvette de collecte (15, 20, 31) est reliée à la console (3, 25, 30) par l'intermédiaire d'un support (14, 33).

9. Dispositif de maintien selon la revendication 8, caractérisé par le fait que le support (14, 33) et la console (3, 25, 30) sont reliés l'un à l'autre, avec liberté de coulisser parallèlement, par l'intermédiaire de bras pivotants (12, 13, 21, 22).

10. Dispositif de maintien selon la revendication 8 ou 9, caractérisé par le fait que la cuvette de collecte (15, 20, 31) est reliée de façon amovible au support (14, 33).

11. Dispositif de maintien selon la revendication 10, caractérisé par le fait que l'on peut sortir du support (14, 33), vers l'avant, la cuvette de collecte (15, 20, 31) parallèlement à la paroi de couverture (3a) et que l'on peut l'enfiler dans ce support.

12. Dispositif de maintien selon une ou plusieurs des revendications précédentes, caractérisé par le fait que la cuvette de collecte (15, 20, 31) présente une paroi de fond (15a), des parois latérales (15b, 15c) ainsi qu'une paroi arrière (15d) et une paroi frontale (15e).

13. Dispositif de maintien selon une ou plusieurs des revendications précédentes, caractérisé par le fait que la paroi de fond (15a) présente des languettes d'appui (15f) sur lesquelles s'appuient les surfaces de fond des récipients à liquide (11).

14. Dispositif de maintien selon une ou plusieurs des revendications précédentes, caractérisé par le fait que les parois latérales (14b, 14c) du support (14) ainsi que les parois latérales (15b, 15c) et la paroi arrière (15d) et que la paroi frontale (15e) de la cuvette de collecte (15) peuvent se rabattre dans les espaces creux de la console (3) limités par les parois latérales (3b, 3c) et la paroi avant (6) ainsi que par les surfaces d'appui (9a, 10a).

15. Dispositif de maintien selon une ou plusieurs des revendications précédentes, caractérisé par le fait que sur la console (3, 25, 30) est disposé un couvercle rabattable (25a) qui contient les évidements (9, 10, 26, 27).

16. Dispositif de maintien selon la revendication 15, caractérisé par le fait que les surfaces d'appui (9a, 10a, 26a, 27a) sont disposées sur le couvercle (25a).

17. Dispositif de maintien selon la revendication 16, caractérisé par le fait que l'on peut sortir de la console (3, 25, 30), vers le haut, la cuvette de collecte (15, 20, 31).

18. Dispositif de maintien selon une ou plusieurs des revendications précédentes, caractérisé par le fait que la cuvette de collecte (15, 20, 31) ou le support (14, 33) sont guidés dans le boîtier de protection (2, 32) avec liberté de coulissement longitudinal.

19. Dispositif de maintien selon la revendication 18, caractérisé par le fait que la console (30) sort, vers le haut, hors de la cuvette de collecte (31) ou du support (33), pour venir dans la position de crantage extérieure.

20. Dispositif de maintien selon l'une des revendications 18 ou 19, caractérisé par le fait que le support (14, 33) contient une paroi avant rabattable (33a) et que l'on peut sortir du support, vers l'avant, la cuvette de collecte (15, 20, 31).

21. Dispositif de maintien selon une ou plusieurs des revendications précédentes, caractérisé par le fait que le mouvement de la console (3, 25, 30) et du support (14, 33), y compris la cuvette de collecte (15, 20, 31), pour sortir hors du boîtier de protection (2, 32), pour passer de la position de crantage intérieure à la position de crantage extérieure, se fait sous l'action de la force d'un ressort (4).

22. Dispositif de maintien selon la revendication 21, caractérisé par le fait que la console (3, 25, 30) ou le support (14, 33) ou la cuvette de collecte (15, 20, 31) sont maintenus dans le boîtier de protection (2, 32) par l'intermédiaire d'un verrouillage déverrouillable (5).

23. Dispositif de maintien selon la revendication 22, caractérisé par le fait que le verrouillage (5) peut être déverrouillé au moyen d'une touche (7) disposée sur la paroi avant (6, 33a).

24. Dispositif de maintien selon une ou plusieurs des revendications précédentes, caractérisé par le fait que la séparation, l'un de l'autre, de la console (3, 25, 30) et de la cuvette de collecte (15, 20, 31) ou du support (14, 33), lors de leur sortie pour passer de la position de crantage intérieure à la position de crantage extérieure, se fait sous l'action de la force d'un ressort (16).

25. Dispositif de maintien selon la revendication 24, caractérisé par le fait que le rabattement, vers l'intérieur, de la console (3, 25, 30) et de la cuvette de collecte (15, 20, 31) ou du support (14, 33), lors de leur réintroduction dans le boîtier de protection (2, 32), est activé par leur montée sur les arêtes avant (2a) prévues sur le boîtier de protection (2, 32).
